(19) Europäisches Patentamt
European Patent Office
Office européen des brevets

(11) **EP 2 031 767 A2**

(12) **EUROPÄISCHE PATENTANMELDUNG**

(43) Veröffentlichungstag:
**04.03.2009  Patentblatt 2009/10**

(51) Int Cl.:
***H04B 7/08*** *(2006.01)*

(21) Anmeldenummer: **08009445.1**

(22) Anmeldetag: **23.05.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **01.08.2007  DE 102007036040
23.08.2007  DE 102007039914**

(71) Anmelder: **Delphi Delco Electronics Europe GmbH
42119 Wuppertal (DE)**

(72) Erfinder:
• **Lindenmeier, Heinz
82152 Planegg (DE)**
• **Lindenmeier, Stefan
82131 Gauting (DE)**
• **Reiter, Leopold
82205 Gilching (DE)**
• **Hopf, Jochen
85540 Haar (DE)**

(54)  **Antennendiversityanlage mit zwei Antennen für den Funkempfang in Fahrzeugen**

(57)  Die Erfindung betrifft eine Antennendiversityanlage für den Funkempfang in Fahrzeugen, die einen Empfänger (1), zwei Antennen (A1,A2) mit Antennenzuleitungen (2a,2b) zu einem Antennendiversitymodul (6), welches ausgangsseitig mit dem Empfänger (1) über die Empfängerleitung (4) verbunden ist und eine auswerteschaltung (19) umfasst, welche die Störungen in dem gerade zum Empfänger (1) gelangenden Empfangssignals (8) bewertet.

Fig. 1

EP 2 031 767 A2

**Beschreibung**

Die Erfindung betrifft eine Antennendiversityanlage für den Funkempfang in Fahrzeugen, die einen Empfänger 1, zwei Antennen A1, A2 mit Antennenzuleitungen 2a, 2b zu einem Antennendiversitymodul 6, welches ausgangsseitig mit dem Empfänger 1 über die Empfängerleitung 4 verbunden ist und eine Auswerteschaltung 19 umfasst, welche die Störungen in dem gerade zum Empfänger 1 gelangenden Empfangssignals 8 bewertet.

Eine Antennendiversityanlage dieser Art wird bevorzugt für den UKW-Rundfunkempfang eingesetzt und ist bekannt aus DE 102005 043. Insbesondere bei einer UKW Rundfunkempfangsanlage, welche größtenteils zur Serienausstattung von Fahrzeugen gehört, ist die Wirtschaftlichkeit der Anlage von besonderer Wichtigkeit. Die mit Antennendiversityanlagen dieser Art erzielten Vorteile bestehen in der Hauptsache in der Schaffung einer besonders ökonomischen Lösung im Hinblick auf ein gutes Nutzsignal-Störsignal-Verhältnis auch bezüglich Gleichkanal- oder Nachbarkanalstörungen mit den Vorteilen der Gestaltbarkeit für eine Vielzahl von Antennen bei gleichzeitig minimalem Kabelaufwand im Fahrzeug. Befindet sich das Antennendiversitymodul z.B. in der Nähe einer kompakten Mehrantennenanlage, wie zum Beispiel auf der Heckfensterscheibe eines Fahrzeugs, so wird bei einer Vielzahl von Antennen nur eine Empfängerleitung zum Empfänger benötigt. Mit einer Antennendiversityanlage nach der vorbekannten Patentanmeldung ist die Vielzahl der zumeist vier vorgesehenen Antennen zur Erzielung einer ausreichenden Diversityeffizienz jedoch in besonderen Fällen nicht anwendbar oder zu aufwändig. In diesen Fällen ist es wünschenswert, die mit der kleinen Anzahl von nur zwei Antennen erreichbare Diversityeffizienz, insbesondere im Hinblick auf die Reduzierung von Nachbarkanalstörungen zu verbessern. Diese Form von Störungen ist insbesondere im UKW-Rundfunkfrequenzbereich aufgrund der großen Zunahme neuer Rundfunkstationen und den sich daraus ergebenden, in Grenzbereichen teilweise überlappenden Frequenzkanälen der Rundfunkstationen dominant geworden.

Aufgabe der Erfindung ist es deshalb, bei einer Antennendiversityanlage nach dem Oberbegriff des Anspruchs 1, diese Nachteile zu vermeiden und eine sowohl kostengünstige als auch eine hoch effiziente Antennendiversityanlage zu gestalten, welche es ermöglicht Empfangsstörungen und insbesondere die durch Nachbarrundfunkkanäle verursachten Störungen so klein wie möglich zu gestalten.

Diese Aufgabe wird erfindungsgemäß durch den kennzeichnenden Teil des Anspruchs 1 gelöst.

Mit der Erfindung ist der Vorteil verbunden, dass durch die nach Betrag und Phasenwinkel vom Prozessor 3 mit Hilfe eines Suchalgorithmus kombiniert einstellbare Gewichtung der Summation der beiden Antennensignale zu jedem Zeitpunkt ein optimales Nutzsignal-Störsignal-Verhältnis eingestellt werden kann. Dabei kann bei vorgegebenem Rauschpegel R der Anlage das augenblickliche Verhältnis von Nutzsignal S im Nutz-Frequenzkanal zur gesamten Störung, bestehend aus der Summation von Eigenrauschen R und Nachbarkanalstörungen N auf aufwandsarme Weise optimiert werden. Durch Einstellung der komplexen Gewichtung der Antennensignale stellt sich zu jedem Zeitpunkt ein resultierendes Richtdiagramm der beiden Antennen derart ein, dass die sich aus den unterschiedlichen Raumrichtungen überlagernden Teilwellen des Nutzsignals sowie die Teilwellen des Nachbarkanalsignals unter Berücksichtigung des Eigenrauschens R das oben genannte optimale Nutzsignal-Störsignal-Verhältnis ergeben.

Bei Funksystemen, deren Betrieb nicht durch Nachbarkanalstörungen beeinträchtigt ist, oder keine wirkungsvolle Unterdrückung solcher Störungen vorgesehen ist, wird das Maximum-Ratioverfahren angewandt. Ein solches Antennensystem ist für den FM-Rundfunk in Fahrzeugen aus der EP11266 bekannt, welches darauf abzielt, durch gleichphasige Summation zweier oder auch mehrerer Antennensignale ein größeres Nutzsignal zu erzielen als mit einer Einzelantenne, um so im Gebiet mit Mehrwegeausbreitung die Wahrscheinlichkeit von Pegeleinbrüchen zu reduzieren. Damit ergibt sich im Summensignal der Antennen ein in Bezug auf das Empfängerrauschen maximales Signalrauschverhältnis. Bezüglich solcher empfangener Störsignale mit Frequenzanteilen im Nutzfrequenzkanal, welche aufgrund mangelnder Trennschärfe im Empfänger im Nutzkanal auftreten, liefert die Gleichphasung von Antennensignalen nach diesem Verfahren keine ausreichende Unterdrückung solcher Störungen. Die sich ergebende Diversityeffizienz ist unter Berücksichtigung von Nachbarkanalstörungen nicht ausreichend.

Nachbarkanalstörungen entstehen meist aufgrund einer begrenzten Selektion in der Zwischenfrequenzebene. Auch durch Intermodulation anderer UKW-Sender im Empfangskanal auftretende Signale bewirken in Verbindung mit Pegeleinbrüchen Frequenzhubstörungen auf dem Nutzsignal, welche mit dem Phasenregelsystem mit Gleichphasung nicht eliminiert werden können.

Die in der EP 1126631 angegebene Anordnung besitzt jedoch den verbleibenden Nachteil, dass im Falle des Auftretens von Gleichkanal- oder Nachbarkanalstörungen durch unerwünschte Rundfunksender - welche aufgrund der dichten Frequenzbelegung mit Sendern eine häufige Störungsursache bilden - die Pegelmaximierung durch Gleichphasung des gewünschten Signals die Störerscheinung in der Regel nicht beseitigt. Vielmehr ist es in solchen Situationen wichtig, das Verhältnis von Nutzsignal zu Störsignal zu verbessern. Führt die Wahl eines diversitätsmäßig unterschiedlichen Empfangssignals aus der Vielzahl von Antennen nicht zu einem störungsfreien Empfang, so kann die Gleichphasung des gewünschten Signals nicht zum Ziel führen, weil das störende Gleichkanal- oder Nachbarkanalsignal damit in aller Regel nicht unterdrückt wird.

Die mit der Erfindung erzielten Vorteile bestehen in der Hauptsache in der Schaffung einer besonders ökonomischen Antennendiversityanlage mit allen Vorteilen im Hinblick auf ein gutes Signal-Störverhältnis auch bezüglich Gleichkanal- oder Nachbarkanalstörungen mit lediglich zwei Antennen und bei gleichzeitig minimalem Kabelaufwand im Fahrzeug. Befindet sich das Antennendiversitymodul 6 z.B. in der Nähe einer kompakten Antennenanlage mit nur zwei Antennen, wie zum Beispiel auf der Heckfensterscheibe eines Fahrzeugs, so wird nur eine Empfängerleitung 4 zum Empfänger 1 benötigt. Die Verbesserung des Nutzsignal-Störsignal-Verhältnisses bezüglich Gleichkanal- oder Nachbarkanalstörungen ist erfindungsgemäß durch den Prozessor 3 bewirkt, durch welchen stets eine Einstellung von Betrag und Phasenwinkel der beiden Antennen-Empfangssignale 7a, 7b zur Linearkombination der beiden Signale für ein störungsarmes Empfangssignal 8 gegeben ist. Die kostengünstige Verfügbarkeit der hierfür notwendigen elektronischen und elektrischen Bauelemente im Antennendiversitymodul 6, welches vorzugsweise in der Nähe einer Antennenanlage 2 mit 2 Antennen positioniert ist, ermöglicht in Verbindung mit nur einer Verbindungsleitung zum Empfänger ein für den Automobilbau sowohl kostengünstiges als auch bezüglich der Handhabung besonders attraktives Konzept.

Ausführungsbeispiele der Erfindung sind in folgenden Zeichnungen dargestellt. Es zeigen:

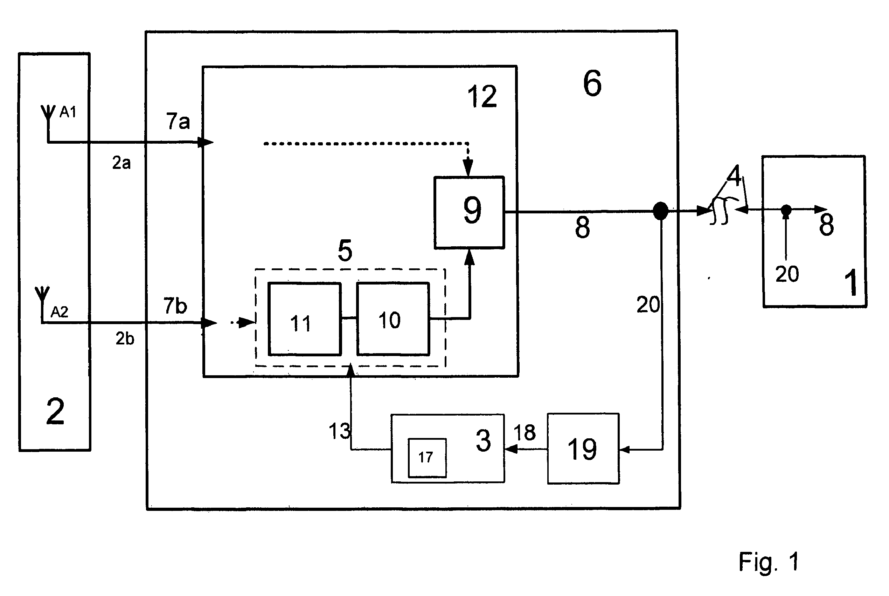

Fig. 1: Blockschema von der Grundform einer Antennendiversityanlage nach der Erfindung mit Antennenanlage mit zwei Antennen, Antennendiversitymodul 6 und Empfängerleitung 4 zum Empfänger 1. Im Antennendiversitymodul 6 ist ein einstellbares Linearkombinationsglied 12 vorhanden, nach welchem die Antennen-Empfangssignale 7a, b nach einer Veränderung in Betrag und Phase in mindestens einem darin enthaltenen einstellbaren Übertragungsglied 5 im Summationsglied 9 überlagert werden, woraus das Empfangssignal 8 gebildet ist. Der Auswerteschaltung 19 zur Bewertung der Störungen des Empfangssignals 8 ist z.B. das zugehörige ZF-Signal 20 über die Empfängerleitung 4 zugeführt. An Hand des Störungsanzeigesignals 18 steuert der Prozessor 3 das einstellbare Übertragungsglied 5 stets in der Weise, dass ein störungsarmes Empfangssignal 8 erreicht wird.

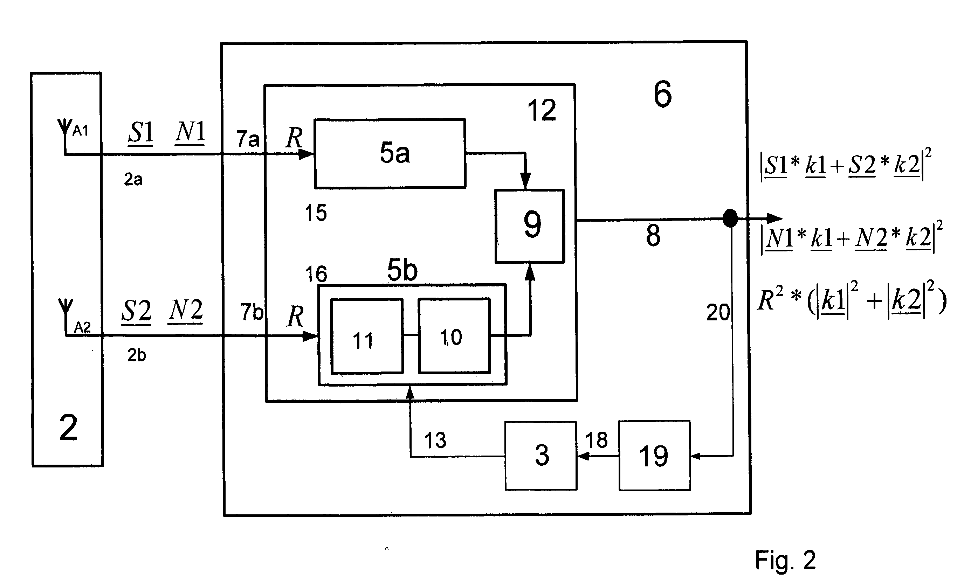

Fig. 2: Antennendiversityanlage wie in Figur 1, jedoch mit zwei ausgewiesenen Signalpfaden 15, 16 im einstellbaren Linearkombinationsglied 12 mit jeweils einem einstellbaren Übertragungsglied 5a, 5b mit den entsprechenden komplexen Übertragungsfaktoren $\underline{k1}$, $\underline{k2}$ zur Erläuterung der Wirkungsweise der Erfindung. $\underline{S1}$, $\underline{S2}$ stellen die komplexen Amplituden der gewünschten und $\underline{N1}$, $\underline{N2}$ die störungsbedingten Anteile im Antennen-Empfangssignal 7a, b des Empfangskanals dar. Die Größe R repräsentiert das Rauschen in beiden Signalpfaden. Die Signale am Ausgang des Antennendiversitymoduls 6 beschreiben die Leistungsanteile des linear kombinierten gewünschten Signals (oben), eines Nachbarkanals (Mitte) sowie die Rauschleistung (unten).

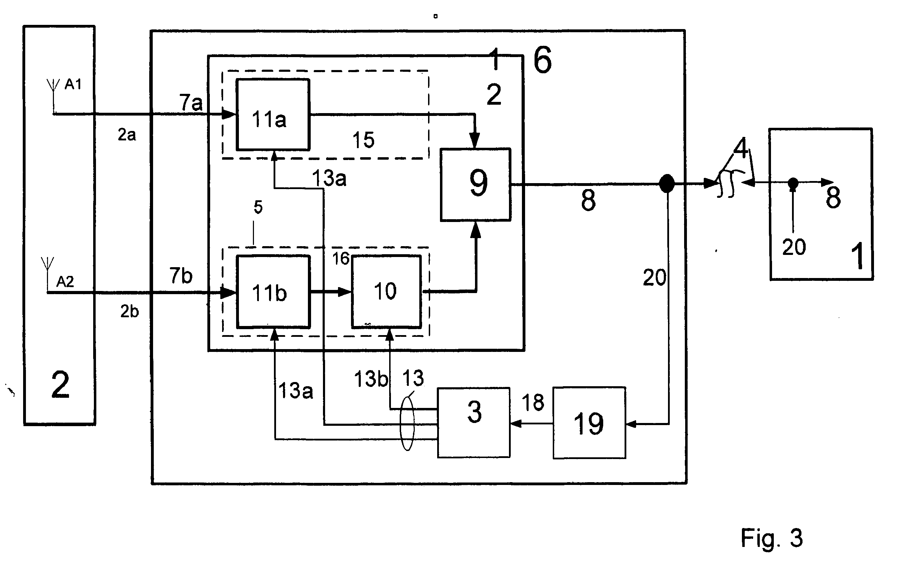

Fig. 3: Antennendiversityanlage wie in Figur 2 mit einem einstellbaren Signalpegelglied 11a im ersten separaten Signalpfad 15 und einem einstellbaren Signalpegelglied 11b mit einer nach geschalteten einstellbaren Phasendreheinrichtung 10 im einstellbaren Übertragungsglied 5 im zweiten separaten Signalpfad 16.

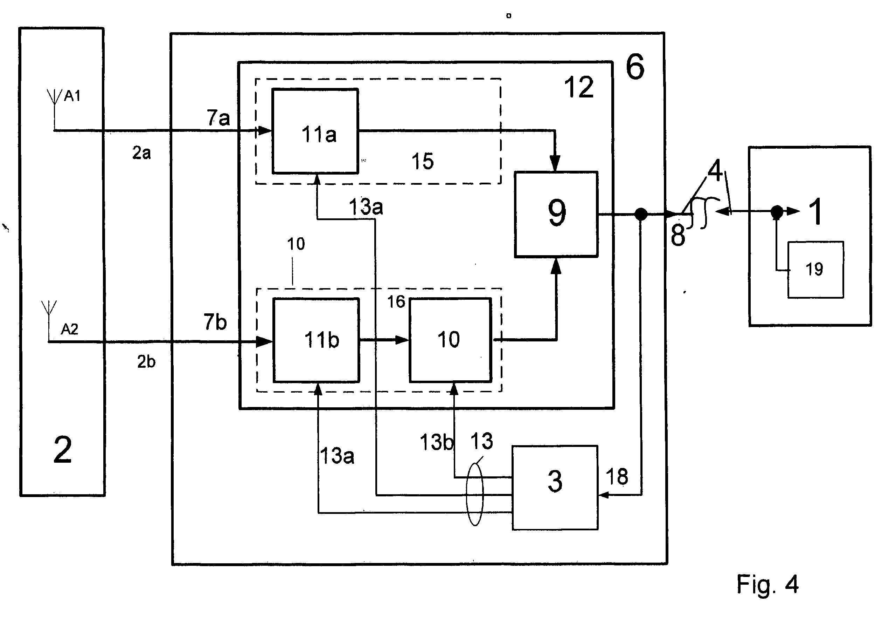

Fig. 4: Antennendiversityanlage wie in Figur 3 jedoch mit einer im Empfänger 1 befindlichen Auswerteschaltung 19 deren Störungsanzeigesignal 18 über die Empfängerleitung 4 zum Antennendiversitymodul 6 und dort zum Prozessor 3 geführt ist.

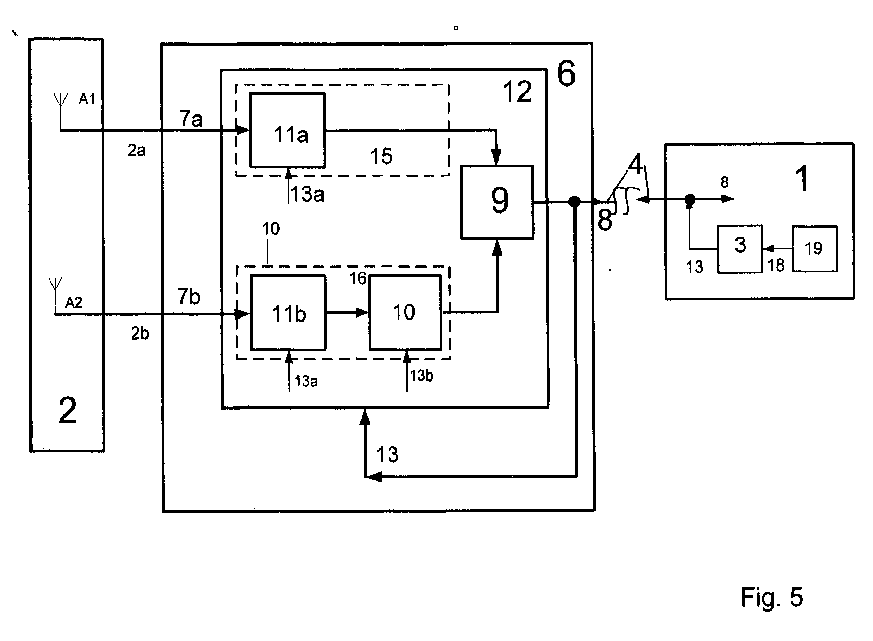

Fig. 5: Antennendiversityanlage wie in Figur 4 jedoch mit einem im Empfänger 1 befindlichen Prozessor 3, dessen vorzugsweise digital gestaltete Einstellsignale 13, bestehend aus Pegel-Einstellsignalen 13a und Phasen-Einstellsignalen 13b über die Empfängerleitung 4 zum einstellbaren Linearkombinationsglied 12 geführt sind.

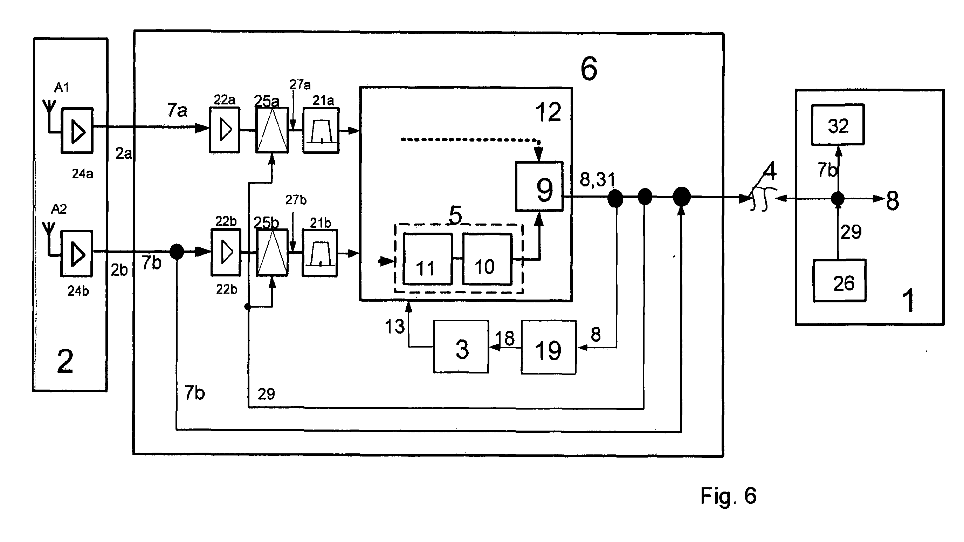

Fig. 6: Antennendiversityanlage wie in Figur 1 jedoch mit ZF-Frequenzumsetzern 25a, 25b zur Umsetzung und Filterung in den ZF-Filtern 21a, 21b der über Antennenverstärker 24a, 24b beziehungsweise über Verstärker mit Vorselektion 22a, 22b verstärkten Antennen-Empfangssignale 7a,b. Die Empfangssignale in der Zwischenfrequenzebene 27 werden dem für die Zwischenfrequenz gestalteten einstellbaren Linearkombinationsglied 12 zugeführt und dort linear kombiniert. Das Empfangssignal 8 ist als ZF-Empfangssignal 31 über die Empfängerleitung 4 dem Empfänger 1 zur weiteren Verarbeitung zugeführt. Die Abstimmung der Anlage auf den Nutz- Empfangskanal erfolgt über die im Empfänger 1 vom Oszillator 26 erzeugte Oszillatorschwingung 29, welche über die Empfängerleitung 4 den beiden ZF-Frequenzumsetzern 25a, 25b im Antennendiversitymodul 6 zugeführt wird.

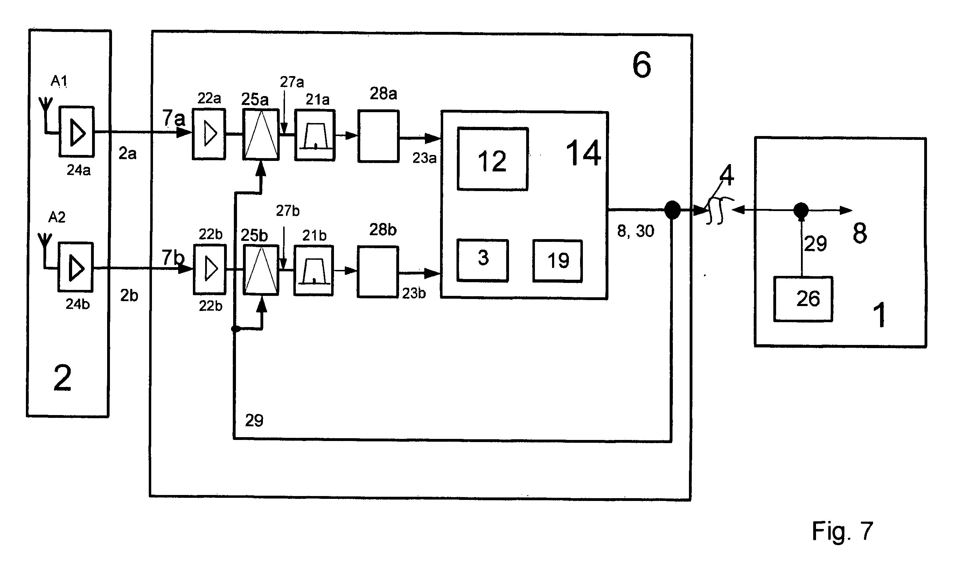

Fig. 7: Antennendiversityanlage mit Frequenzumsetzung der Antennen-Empfangssignale 7a, b in die ZF-Ebene wie in Figur 6, jedoch mit anschließender Analog-Digitalwandlung in den Analog-Digitalwandlern 28a, 28b und mit den digitalisierten ZF-Signalen 23a, 23b zur digitalen Weiterverarbeitung im digitalen Signalprozessor 14, dessen Ausgangssignal als digitales Empfangssignal 30 über die Empfängerleitung 4 dem Empfänger 1 zugeführt ist. Die Funktion der Auswerteschaltung 19 zur Anzeige von Störungen im Empfangssignal 30 sowie die Funktion des Prozessors 3 mit dem in ihm abgelegten Suchalgorithmus 17 zur Einstellung der Funktion des digital einstellbaren Linearkombinationsglieds 12, sind im Signalprozessor 14 digital gestaltet. Die Bildung der Linearkombination erfolgt durch digitale Berechnung im digitalen Signalprozessor 14.

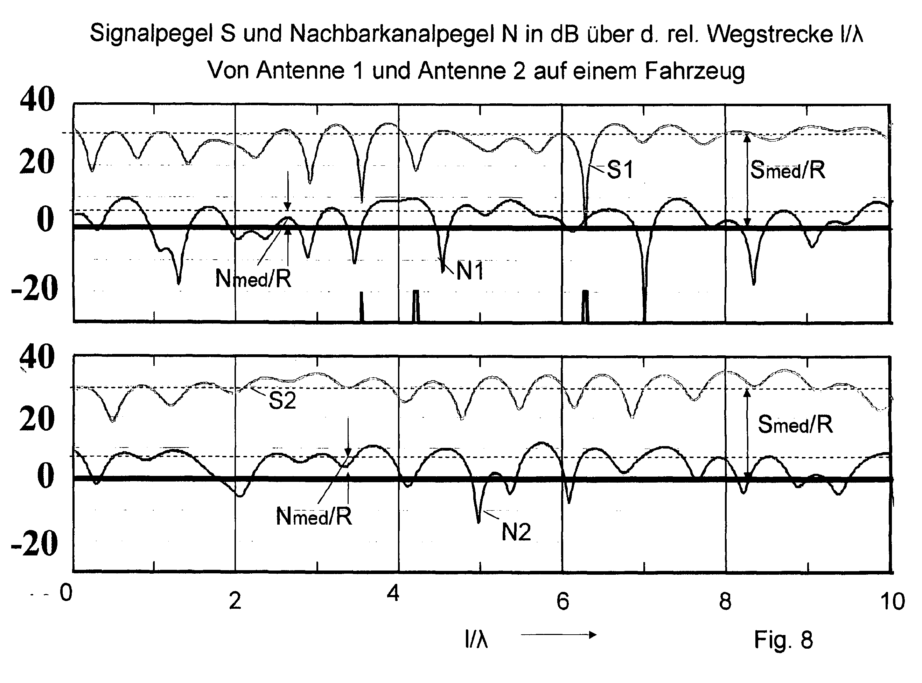

Fig. 8: Relative auf den Rauschpegel R bezogene Augenblickswerte der Signalpegel S1, S2 und der Nachbarkanalpegel N1, N2 im Nutz-Frequenzkanal in dB über der auf die Wellenlänge $\lambda$ bezogenen Wegstrecke $l$ von Antenne 1 und Antenne 2 auf einem Fahrzeug. Der Abstand zwischen dem Mittelwert des nach Rayleigh verteilten Signalpegels S und dem Rauschen R ist jeweils durch die Pfeile $S_{med}/R$ in dB gekennzeichnet. Alle Werte sind auf das Rauschen R = 0dB bezogen.
Oben: Antennen-Empfangssignal 7a. Unten: Antennen-Empfangssignal 7b.

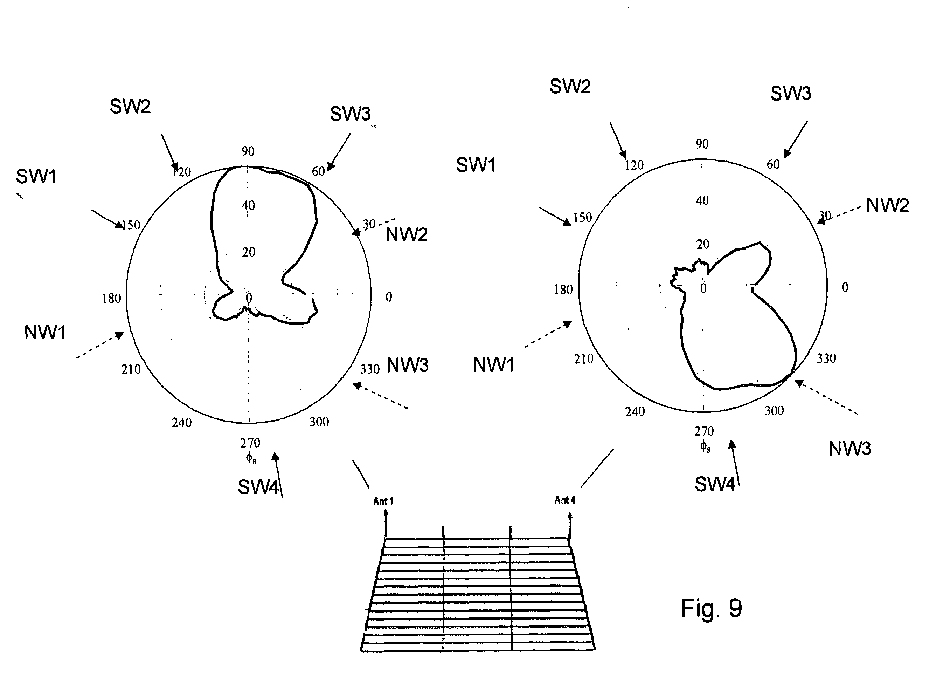

Fig. 9: Veranschaulichung der Bildung der Antennen-Empfangssignale 7a, b, welche an den beiden, im Beispiel aus den Sammelschienen einer Fahrzeug-Heckscheibe gebildeten Antennen A1, A2 abgegriffen werden können.

Fig. 10:
Zeigerdiagramm der sich überlagernden und durch das Richtdiagramm nach Betrag und Phase jeweils gemäß ihrer Einfallsrichtung gewichteten empfangenen Wellen SW1....SW4 in Fig. 9 an einem Empfangsort mit großem Empfangspegel S1 der Antenne A1.

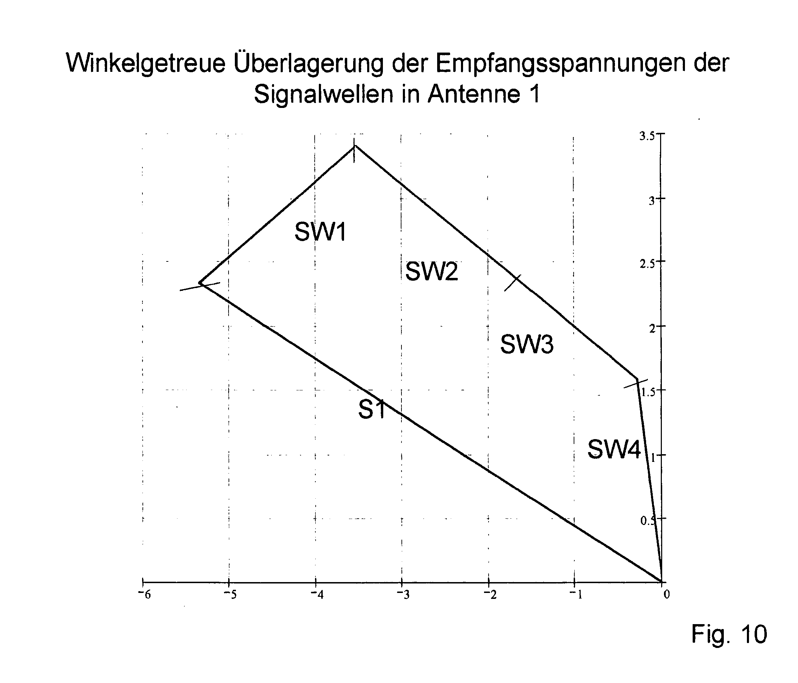

Fig. 11:
Zeigerdiagramm wie in Figur 10 jedoch für die Antenne A2 an demselben Empfangsort, an welchem sich für diese Antenne A2 ein Pegeleinbruch ergibt und sich die Wirkung dieser Wellen SW1.... SW4 bis auf einen kleinen Restpegel S2 aufhebt.

Fig. 12:
Gegenüberstellung der Diversityeffizienzen beim Empfang im Rayleigh-Feld mit verschiedenen Diversitystrategien bei einem Nachbarkanal/Rauschabstand $N_{med}/R$ = 10 dB
Kurve 1: Diversityeffizienz einer Antennendiversityanlage nach der Erfindung.
Kurve 2: Diversityeffizienz unter Kombination der gewünschten Signale $\underline{S1}$, $\underline{S2}$ der beiden Antennen bei ausschließlich optimaler Phaseneinstellung und konstantem Betrag $|\underline{k}|$=1.
Kurve 3: Diversityeffizienz bei Scanning-Diversity mit zwei Antennen.

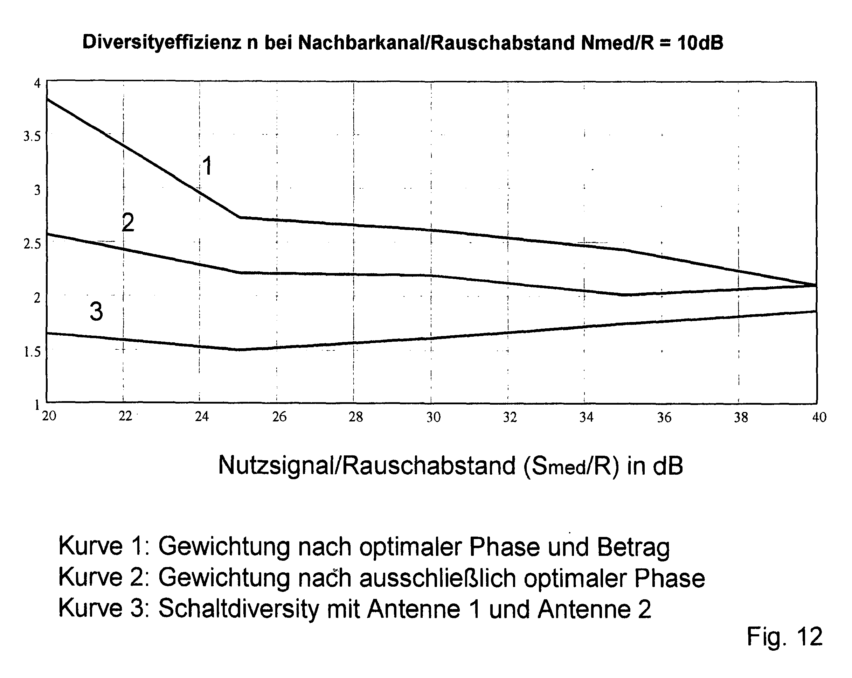

Fig. 13:
Darstellung wie in Figur 12 jedoch bei einem Nachbarkanal/Rauschabstand $N_{med}/R$ = 15 dB. Kurve 1: Diversityeffizienz einer Antennendiversityanlage nach der Erfindung.
Kurve 2: Diversityeffizienz unter Kombination der gewünschten Signale $\underline{S1}$, $\underline{S2}$ der beiden Antennen bei ausschließlich optimaler Phaseneinstellung und konstantem Betrag $|\underline{k}|$ =1.
Kurve 3: Diversityeffizienz bei Scanning-Diversity mit zwei Antennen.

Fig. 14:
Empfangssituationen wie in Figur 12 an Stelle der Diversityeffizienzen n sind die Wahrscheinlichkeiten der auftretenden Störungen aufgetragen.
Kurve 1: Diversityanlage nach der Erfindung.

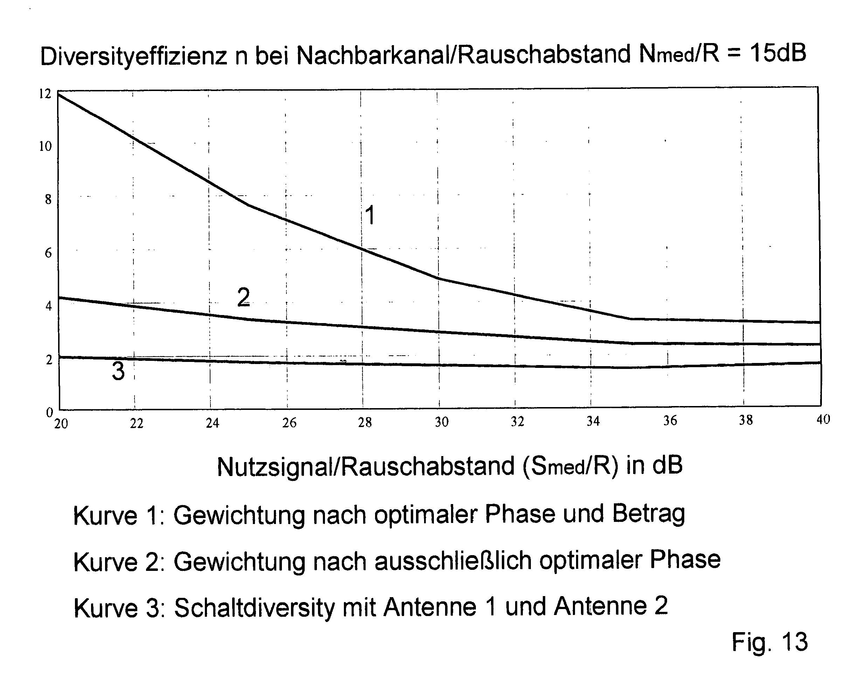

Fig. 15:
Empfangssituationen wie in Figur 13; an Stelle der Diversityeffizienzen n sind die Wahrscheinlichkeiten der auftretenden Störungen aufgetragen.
Kurve 1: Diversityanlage nach der Erfindung.

Fig. 16: Vergleichende Darstellung der Diversityeffizienz n bei Nachbarkanalstörungen mit 2 Antennen und $N_{med}/R$ = 10dB von der Gleichphasung der Antennensignale und einem reinen Schaltdiversity.

Fig. 17: Vergleichende Darstellung der Diversityeffizienz n bei Nachbarkanalstörungen mit 2 Antennen und $N_{med}/R$ = 15dB von der Gleichphasung der Antennensignale und einem reinen Schaltdiversity.

Fig. 1 zeigt das Blockschema einer Grundform einer Antennendiversityanlage nach der Erfindung mit Antennenanlage mit zwei Antennen, Antennendiversitymodul 6 und Empfängerleitung 4 zum Empfänger 1. Im Antennendiversitymodul 6 ist in ganz allgemeiner Form ein einstellbares Linearkombinationsglied 12 dargestellt, worin die Antennen-Empfangssignale 7a, b nach einer Veränderung in Betrag und Phase in mindestens einem darin enthaltenen einstellbaren Übertragungsglied 5 im Summationsglied 9 überlagert werden. Das zum Empfänger gelangende Empfangssignal 8 ist am Ausgang des Summationsglieds 9 gebildet. Im gezeigten Beispiel ist der Auswerteschaltung 19 zur Bewertung der Störungen des Empfangssignals 8 das zugehörige ZF-Signal 20 über die Empfängerleitung 4 zugeführt. Das Störungsanzeigesignal 18 löst im Prozessor 3 einen Einstellvorgang für das einstellbare Übertragungsglied 5 aus. Anhand eines im Prozessor 3 abgelegten Suchalgorithmus 17 werden sukzessive unterschiedliche Einstellungen des einstellbaren Übertragungsglieds 5 vorgenommen. Der Suchalgorithmus 17 arbeitet solange, bis das durch das Störungsanzeigesignal 18 angezeigte Signal-to-Distortion-Ratio (SDR) für einen als rein empfundenen Empfang groß genug ist.

In Figur 2 sind zur Bildung der Linearkombination beispielhaft zwei getrennte Signalpfade 15, 16 im einstellbaren Linearkombinationsglied 12 ausgewiesenen mit jeweils einem einstellbaren Übertragungsglied 5a, 5b mit den entsprechenden komplexen Übertragungsfaktoren $\underline{k1}$, $\underline{k2}$. Am Ausgang des Antennendiversitymoduls 6 sind zur Erklärung der Wirkungsweise der Erfindung die Leistungsanteile im Empfangssignal 8 aufgelistet. Darin sind $\underline{S1}$ bzw. $\underline{S2}$ die aktuellen gewünschten Empfangssignale der Antennen 1 bzw. 2 nach Betrag und Phase. Der typische Verlauf der Pegel dieser Signale über der gefahrenen Wegstrecke in einem durch Mehrwegeausbreitung gestörten Empfangsfeld ist in Figur 8 in Relation zum Eigenrauschen R des Systems dargestellt. Der Abstand des Mittelwerts $S_{med}$ der Antennen-Nutzsignale in dB ist durch $S_{med}/R$ gekennzeichnet. $\underline{k1}$ bzw. $\underline{k2}$ stellen die aktuellen vom Prozessor 3 an jedem Empfangsort eingestellten Übertragungsfaktoren nach Betrag und Phase dar, mit denen die Empfangssignale $\underline{S1}$, $\underline{S2}$ der Antennen gewichtet am Ausgang des Antennendiversitymoduls 6 erscheinen. Die Leistungsform des linear kombinierten Signals im Empfangssignal 8 lautet demnach:

$$\left| \underline{S1} * \underline{k1} + \underline{S2} * \underline{k2} \right|^2 \qquad (1)$$

Die in der Hauptsache störenden Signalanteile eines Nachbarkanals im Frequenzbereich des Nutzkanals $\underline{N1}$ bzw. $\underline{N2}$ sind ebenso - wie auch die Signale $\underline{S1}$, $\underline{S2}$ - der Mehrwegeausbreitung unterworfen und sind lediglich mit kleineren Pegeln zu erwarten, wie es in Figur 8 dargestellt ist. Der Abstand des Mittelwerts $N_{med}$ der Nachbarkanal-Antennensignale in dB ist durch $N_{med}/R$ gekennzeichnet. Beide komplexe Signalanteile $\underline{N1}$, $\underline{N2}$ werden auf die gleiche Weise linear kombiniert, so dass die Leistungsform dieser Signalanteile im Empfangssignal 8 wie folgt lautet:

$$\left| \underline{N1} * \underline{k1} + \underline{N2} * \underline{k2} \right|^2 \qquad (2)$$

Zur Leistung dieser Störsignale addiert sich das von den Antennen abgegebene dekorrelierte Rauschen mit

$$R^2 * \left( \left| \underline{k1} \right|^2 + \left| \underline{k2} \right|^2 \right) \qquad (3)$$

so dass sich das augenblickliche Nutzsignal-Störsignal-Verhältnis SDR wie folgt ergibt:

$$SDR = \frac{\left| \underline{S1} * \underline{k1} + \underline{S2} * \underline{k2} \right|^2}{\left| \underline{N1} * \underline{k1} + \underline{N2} * \underline{k2} \right|^2 + R^2 * \left( \left| \underline{k1} \right|^2 + \left| \underline{k2} \right|^2 \right)} \qquad (4)$$

Die auf die entsprechenden Mittelwerte $S_{med}$, $N_{med}$ bezogenen komplexen Signale, welche Betrag und Phase beinhalten, lauten:

$$\underline{S1}' = \frac{\underline{S1}}{S_{med}} \;\; ; \quad \underline{S2}' = \frac{\underline{S2}}{S_{med}} \;\; ; \quad \underline{N1}' = \frac{\underline{N1}}{N_{med}} \;\; ; \quad \underline{N2}' = \frac{\underline{N2}}{N_{med}} \qquad (5)$$

beschreibt man das Verhältnis der beiden Übertragungsfaktoren $\underline{k1}$ und $\underline{k2}$ mit

$$\underline{k} = \frac{k2}{\underline{k1}}, \qquad\qquad (6)$$

so lässt sich das Nutzsignal-Störsignal-Verhältnis SDR in der folgenden übersichtlichen Form angeben:

$$SDR = \frac{S_{med}^2}{R^2} * \frac{|\underline{S1'} + \underline{S2'}*\underline{k}|^2}{|\underline{N1'} + \underline{N2'}*\underline{k}|^2 * N_{med}^2/R^2 + (1+|\underline{k}|^2)} \qquad (7)$$

In einem für diese Betrachtungen vorausgesetzten Rayleigh-Empfangsfeld können die Faktoren $\frac{S_{med}^2}{R^2}$ und $N_{med}^2/R^2$ in einem gewissen Bereich jeweils als konstant, die Signale $\underline{S1}, \underline{S2}, \underline{N1}, \underline{N2}$ jedoch als statistisch stark variierende Größen angesehen werden. Das Wesen der vorliegenden Erfindung besteht somit darin, durch Einstellung des einstellbaren Linearkombinationsglieds 12 an jedem Empfangsort der gefahrenen Wegstrecke einen komplexen Übertragungsfaktor

$\underline{k} = \frac{k2}{\underline{k1}}$ einzustellen, dass sich für das Nutzsignal-Störsignal-Verhältnis SDR ein Maximum einstellt, beziehungsweise ein Wert ergibt, wenn er einen hinreichenden störungsfreien Empfang ermöglicht. Aufgrund des statistischen Charakters sowohl der Nutzsignalanteile als auch der Störsignalanteile erfolgt die geforderte Einstellung der Linearkombination der Antennen-Empfangssignal 7a, b nach Betrag und Phase an Hand eines Suchalgorithmus 17, welcher im Prozessor 3 abgelegt ist. Sowohl der Wert der Phase von $\underline{k}$ im Bereich von 0° bis 360° als auch der Betrag von $\underline{k}$ im Bereich von -20dB bis +20dB schwankt je nach Fahrgeschwindigkeit schnell und erfordert zur Einhaltung der Bedingung für großes SDR an jedem Ort der gefahrenen Wegstrecke einen entsprechend schnell arbeitenden Prozessor 3. Für volle Wirksamkeit ist eine Neueinstellung des komplexen Übertragungsfaktors $\underline{k}$ etwa alle λ/20 der gefahrenen Wegstrecke erforderlich. Zur Einstellung eines günstigen Werts für $\underline{k}$ können erfindungsgemäß verschiedene Suchalgorithmen 17 angewandt werden. Wollte man einen Suchalgorithmus der Art anwenden, welcher den Winkelraum von 360° in 10°-Schritten und den Pegelraum von -20 dB bis plus 20 dB für den Betrag von $|\underline{k}|$ in Schritten von 1 dB absucht, so wären im ungünstigsten Fall zur Erreichung des sicheren Optimum 36*40 = 1440 Schritte notwendig. Untersuchungen haben jedoch gezeigt, dass es gemäß der Erfindung möglich ist, im Suchvorgang bei fest eingestelltem Betrag $|\underline{k}|$ der Linearkombination zunächst in wenigen Suchschritten durch Variation der Phase von $\underline{k}$ ein relatives Minimum der Störungen zu ermitteln, um dann bei diesem festgestellten Phasenwert den Suchvorgang in zunächst großen Schritten und dann zu kleineren Schritten übergehend vergleichend fortzusetzen. Der Suchvorgang wird dann abgebrochen, wenn das Störungsanzeigesignal 18 einen kleinen Wert annimmt, der einem als rein empfundenen Empfang entspricht beziehungsweise wenn das Störungsanzeigesignal 18 einen minimalen Wert annimmt. Hierbei zeigte es sich als ausreichend, wenn der Phasenwinkel auf etwa 10° und der Betrag auf etwa 1dB genau optimiert wird. Als besonders vorteilhaft zeigt sich dabei, dass aufgrund der Natur der Feldverteilung im vom Mehrwegeempfang gestörten Empfangsfeld es praktisch vollkommen ausreichend ist, zunächst für die Phase ein relatives Minimum des Störungsanzeigesignals 18 zu ermitteln und anschließend bei dieser Einstellung der Phase nach dem optimalen Wert des Betrags von $\underline{k}$ zu suchen. Um den Suchvorgang auf möglichst wenige Schritte zu beschränken, ist es erfindungsgemäß vorteilhaft, die Störungen im Winkelraum bezüglich der Quadranten vergleichend festzustellen, um von dem Winkelwert mit kleinster Störung ausgehend durch Halbierung der verbleibenden Winkelräume jeweils sukzessive bis zu einer Winkelauflösung von etwa 10° fortzusetzen. In der darauf folgenden Suche nach dem optimalen Betrag von $\underline{k}$, ausgehend von 10 dB-Schritten, kann auf analoge Weise mit immer kleiner werdenden dB-Schritten schließlich mit wenigen Einstellungen ein optimaler Wert für das komplexe $\underline{k}$ eingestellt werden. Auf diese Weise ist es erfindungsgemäß möglich, bei einer Fahrgeschwindigkeit von 100 km/h alle λ/20 der gefahrenen Wegstrecke - d.h. innerhalb 5,3 ms - eine passende Einstellung für eine Linearkombination sicherzustellen.

In der Antennendiversityanlage nach der Erfindung in Fig. 3 sind zur Bildung der Linearkombination ein erster und ein zweiter separater Signalpfad 15, 16 ausgebildet. Die Einstellung der Signalpegel der Antennen-Empfangssignale 7a, b vor der Überlagerung erfolgt mit dem einstellbaren Signalpegelglied 11a im ersten Signalpfad 15 und einem einstellbaren Signalpegelglied 11b im zweiten Signalpfad 16. Auf diese Weise kann der Betrag von $\underline{k}$ in weiten Grenzen verändert werden. Die einstellbaren Signalpegelglieder 11a und 11b können in vorteilhafter Weise als einfache einstellbare Dämpfungsglieder - zum Beispiel als Pin-Dioden-Dämpfungsglieder - gestaltet werden. Die Einstellung der Phase von k kann vorteilhaft mit einer einstellbaren Phasendreheinrichtung 10 im einstellbaren Übertragungsglied 5 im zweiten separaten Signalpfad 16 erfolgen. Für die Realisierung einer einstellbaren Phasendreheinrichtung 10 sind Schaltungen bekannt, die z.B. unter Verwendung eines 90°-Hybrids die Einstellung der Phase mit Hilfe der an eine Kapazitätsdiode angelegten Spannung ermöglichen. In diesem Beispiel sind die Auswerteschaltung 19 und der Prozessor 3 im Antennendiversitymodul untergebracht und das Empfangssignal 8 ist zur Prüfung auf Störung in Form des im Empfänger 1 gebildeten ZF-Signals 20 über die Empfängerleitung 4 der Auswerteschaltung 19 zugeführt.

In einer weiteren vorteilhaften Ausgestaltung einer Antennendiversityanlage nach der Erfindung ist in Figur 4 die Auswerteschaltung 19 zur Prüfung des Empfangssignals 8 im Empfänger 1 untergebracht und das Störungsanzeigesignal 18 ist über die Empfängerleitung 4 zum Antennendiversitymodul 6 und dort zum Prozessor 3 geführt.

Schließlich sind in einer weiteren vorteilhaften Ausgestaltung einer Antennendiversityanlage nach der Erfindung in Figur 5 die Auswerteschaltung 19 und der Prozessor 3 im Empfänger 1 untergebracht. Die vom Prozessor 3 generierten Einstellsignale 13 , bestehend aus Pegel-Einstellsignalen 13a und Phasen-Einstellsignalen 13b sind vorzugsweise digital gestaltet und werden über die Empfängerleitung 4 zum Antennendiversitymodul 6 und dort zum digital einstellbaren Linearkombinationsglied 12 geführt.

In einer weiteren vorteilhaften Ausgestaltung der Erfindung werden die Antennen-Empfangssignale 7a, b in Figur 6 am Eingang des Antennendiversitymoduls 6 mit den dort vorhandenen ZF-Frequenzumsetzern 25a, 25b mit anschließender Filterung in den ZF-Filtern 21a, 21b in die Zwischenfrequenzebene 27a, 27b umgesetzt. In vorteilhafter Weise sind die Antennenverstärker 24a, 24b beziehungsweise die Verstärker vor den Frequenzumsetzer 25a, 25b mit einer Vorselektion 22a, 22b zur Unterdrückung von Spiegelfrequenzsignalen ausgestattet. Die Empfangssignale in der Zwischenfrequenzebene 27 werden dem für die Zwischenfrequenz gestalteten einstellbaren Linearkombinationsglied 12 zugeführt und dort linear kombiniert. Mit dieser Anordnung ist der Vorteil verbunden, dass sich sowohl die einstellbare Phasendreheinrichtung 10 als auch das einstellbare Signalpegelglied 11a, 11b auf der Zwischenfrequenz einfacher gestalten lässt. Das Empfangssignal 8 ist als ZF-Empfangssignal 31 über die Empfängerleitung 4 dem Empfänger 1 zu der weiteren Verarbeitung zugeführt. Die Abstimmung der Anlage auf den Nutz- Empfangskanal erfolgt über die im Empfänger 1 vom Oszillator 26 erzeugte Oszillatorschwingung 29, welche über die Empfängerleitung 4 den beiden ZF-Frequenzumsetzern 25a, 25b im Antennendiversitymodul 6 zugeführt wird.

In einer weiteren vorteilhaften Anordnung ist der Frequenzumsetzung in Figur 7 eine Analog-Digitalwandlung in den Analog-Digitalwandlern 28a, 28b zur digitalen Weiterverarbeitung in einem digitalen Signalprozessor 14 nachgeschaltet. Die Funktion der Auswerteschaltung 19 zur Anzeige von Störungen im digitalen Empfangssignal 30 sowie die Funktion des Prozessors 3 mit dem in ihm abgelegten Suchalgorithmus 17 zur Einstellung der Funktion des digital einstellbaren Linearkombinationsglieds 12, sind im Signalprozessor 14 digital gestaltet. Die Bildung der Linearkombination erfolgt durch digitale Berechnung im digitalen Signalprozessor 14, dessen Ausgangssignal als digitales Empfangssignal 30 über die Empfängerleitung 4 dem Empfänger 1 zugeführt ist.

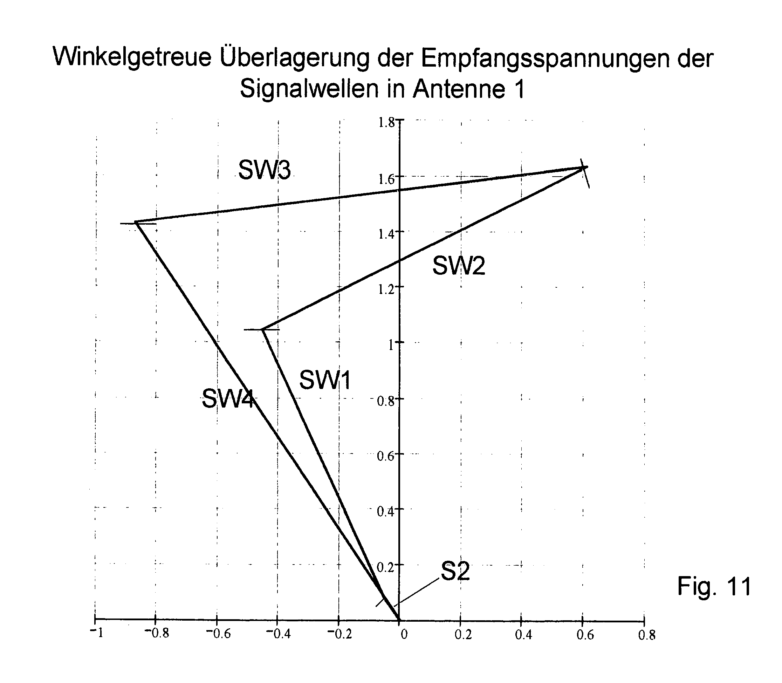

In Fig. 9 ist die Bildung der Antennen-Empfangssignale 7a, b veranschaulicht, welche an den beiden, im Beispiel aus den Sammelschienen einer Fahrzeug-Heckscheibe gebildeten Antennen A1, A2 mit den zugehörigen betragsmäßig dargestellten Richtdiagrammen abgegriffen werden können. Die mit Pfeilen gekennzeichneten Wellen des gewünschten Signals SW1... SW4 sowie die Wellen des störend einfallenden Nachbarkanals NW1...NW3, welche alle dem statistischen Charakter des Mehrwegeempfangs unterliegen, überlagern sich an jedem Empfangsort jeweils durch Bewertung mit dem Richtdiagramm der betreffenden Antenne dem Betrag nach und gemäß der richtungsabhängigen Phasen des Richtdiagramms (im Bild nicht dargestellt). Auf diese Weise entstehen die Signale S1, N1 an der Antenne A1 und entsprechend an der Antenne A2 die Signale S2, N2. Durch Überlagerung der einfallenden Wellen nach Betrag und Phase ergeben sich die in Fig. 8 dargestellten Maxima dort, wo sich die Wellen unterstützen und Minima dort, wo sie sich weitgehend auslöschen. Dieser Sachverhalt ist im Zeigerdiagramm in Figur 10 veranschaulicht, wo die sich überlagernden und durch das Richtdiagramm nach Betrag und Phase gemäß ihrer Einfallsrichtung gewichteten empfangenen Wellen SW1....SW4 an einem Empfangsort einen großen Empfangspegel S1 der Antenne A1 ergeben. Umgekehrt ist in Figur 11 das Zeigerdiagramm an demselben Empfangsort jedoch für die Antenne A2 dargestellt, an welchem sich für diese Antenne ein Pegeleinbruch ergibt und sich die Wirkung dieser Wellen bis auf einen kleinen Restpegel S2 aufhebt. Aufgrund des statistischen Einfalls der Wellen SW1... SW4 des Nutzsignals sowie der Wellen des störend einfallenden Nachbarkanals NW1...NW3 treten die Maxima und die Minima für beide Signale in jedem der Antennen-Empfangssignale 7a, b an statistisch unterschiedlichen Empfangsorten auf. Daraus ergibt sich häufig die ungünstige Situation, dass an einem Empfangsort, an dem ein Pegeleinbruch im gewünschten Empfangssignal einer Antenne auftritt, ein großer Pegel des störenden Signals des Nachbarkanals gegeben ist, so dass das Nutzsignal-Störsignal-Verhältnis SDR im Empfangssignal der betreffenden Antenne sehr gering ist. Dieser Sachverhalt verdeutlicht, dass die Addition der Empfangssignale von zwei Antennen unter Gleichphasung der gewünschten Signale keine besonders wirkungsvolle Maßnahme zur Unterdrückung von Störungen durch den Nachbarkanal sein kann, weil das vom Pegeleinbruch des Nutzsignals betroffene Antennen-Empfangssignal in der Regel einen großen Störbeitrag aus dem Nachbarkanal liefert. In solchen Fällen ist es sogar vorzuziehen, die Signale nicht phasengleich zu kombinieren, und dasjenige Antennen-Empfangssignal 7a, b mit dem größeren Nutzsignal-Störsignal-Verhältnis SDR auszuwählen, wie es bei einem Scanning-Diversity der Fall ist. Erfindungsgemäß existiert jedoch für jede Empfangssituation eine optimale Linearkombination der beiden Antennen-Empfangssignal 7a, b mit einem optimalen komplexen Wert für $\underline{k}$ in Gleichung 6 für einen maximalen Wert des SDR in Gleichung 7. Zur Erreichung dieses Optimums genügt es nicht, ausschließlich den Phasenwert des komplexen $\underline{k}$ zu optimieren, sondern es ist erforderlich, ebenfalls für den Betrag des $\underline{k}$ einen günstigen Wert einzustellen.

Die Leistungsfähigkeiten der hier angesprochenen Diversity-Strategien sind in Figur 12 vergleichend gegenübergestellt. Der Zusammenhang zwischen der Störwahrscheinlichkeit $p_e$ ohne Antennendiversity - das heißt die Störwahrscheinlichkeit in einem der Antennen-Empfangssignale - und der Störwahrscheinlichkeit $p_d$ mit Antennendiversity und der Größe n = Diversityeffizienz lautet:

$$p_d = (p_e)^n \qquad (8)$$

Es sind jeweils die Diversityeffizienzen beim Empfang im Rayleigh-Feld in Abhängigkeit vom Abstand zwischen dem Mittelwert $S_{med}$ des Empfangspegels des Nutzsignals und dem Rauschpegel R in dB bei einem Abstand zwischen dem Störpegel $N_{med}$ des Nachbarkanals und dem Rauschen R von $N_{med}/R = 10$ dB dargestellt. Der aufgrund des Vorhandenseins von Rauschen minimal erforderliche Pegel des Nutzsignals an der Störgrenze ist mit R = 0 dB angesetzt. Somit bedeuten:

Kurve 1: Diversityeffizienz einer Antennendiversityanlage nach der Erfindung. Die beiden Antennensignale werden laufend nach Betrag und Phase bezüglich des augenblicklichen Nutzsignal-Störsignal-Verhältnisses SDR gemäß Gleichung 6 optimal gewichtet linear kombiniert.

Kurve 2: Diversityeffizienz unter Kombination der gewünschten Signale $\underline{S1}$, $\underline{S2}$ der beiden Antennen bei ausschließlich optimaler Phaseneinstellung bezüglich eines relativen Maximums des SDR bei konstantem Betrag $|\underline{k}|$ =1.

Kurve 3: Diversityeffizienz bei Scanning-Diversity mit zwei Antennen. In jedem Augenblick wird ausschließlich dasjenige der beiden Empfangssignale der an Antennen A1 oder A2 mit dem größeren Nutzsignal-Störsignal-Verhältnis SDR zum Empfänger 1 durchgeschaltet.

In Fig. 13 sind auf analoge Weise zu Figur 12 jedoch bei einem Nachbarkanal/Rauschabstand $N_{med}/R = 15$ dB in den Kurven 1, 2 und 3 die Diversityeffizienzen n für die oben angegebenen Diversity-Strategien dargestellt.

Aus den beiden Darstellungen in Figur 12 und 13 geht die deutliche Überlegenheit der Diversity-Strategie nach der vorliegenden Erfindung gegenüber den beiden anderen Strategien hervor. Insbesondere bei kleinen Empfangspegeln des Nutzsignals wird der Vorteil deutlich, der durch die erfindungsgemäße Einstellung eines optimalen Betrags und der optimalen Phase (Kurve 1) des Übertragungsfaktors $\underline{k}$ gegenüber der ausschließlichen Optimierung der Phase (Kurve 2) des Übertragungsfaktors $\underline{k}$ gewonnen werden kann.

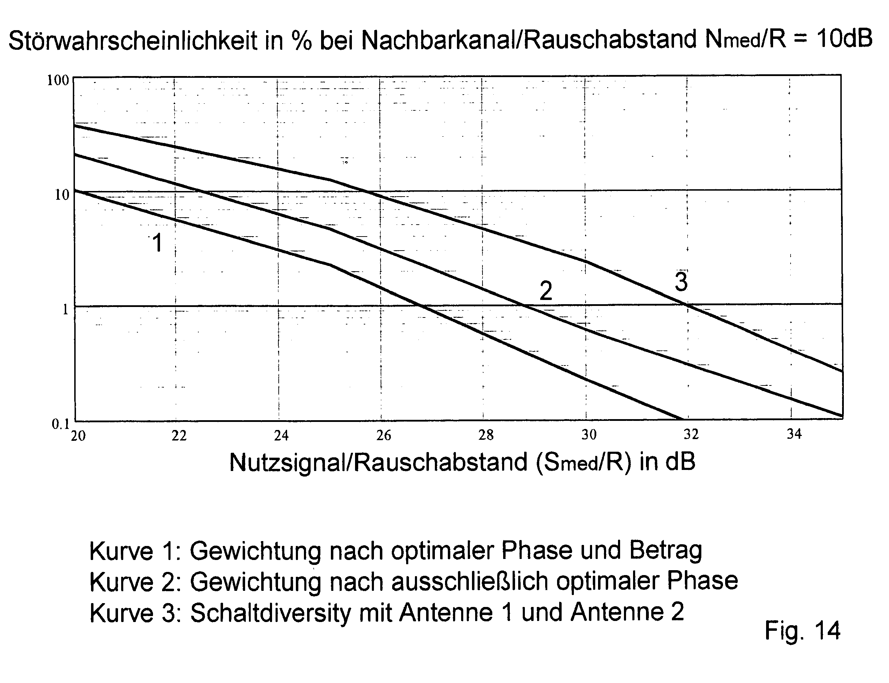

Zur weiteren Veranschaulichung der mit der erfindungsgemäßen Anordnung erreichbaren Vorteile sind in Fig. 14 entsprechend der Empfangssituationen wie in Figur 12 an Stelle der Diversityeffizienzen n die Wahrscheinlichkeiten $p_d$ der auftretenden Störungen aufgetragen. Es zeigen wieder:

Kurve 1: Diversityeffizienz einer Antennendiversity anlage nach der Erfindung. Die beiden Antennensignale werden laufend nach Betrag und Phase bezüglich des augenblicklichen Nutzsignal-Störsignal-Verhältnisses SDR gemäß Gleichung 6 optimal gewichtet linear kombiniert.

Kurve 2: Diversityeffizienz unter Kombination der gewünschten Signale $\underline{S1}$, $\underline{S2}$ der beiden Antennen bei ausschließlich optimaler Phaseneinstellung und konstantem Betrag $|\underline{k}|$ =1.

Kurve 3: Diversityeffizienz bei Scanning-Diversity mit zwei Antennen. In jedem Augenblick wird ausschließlich dasjenige der beiden Antennen-Empfangssignale 7a, 7b der Antennen A1 oder A2 mit dem größeren Nutzsignal-Störsignal-Verhältnis SDR zum Empfänger durchgeschaltet.

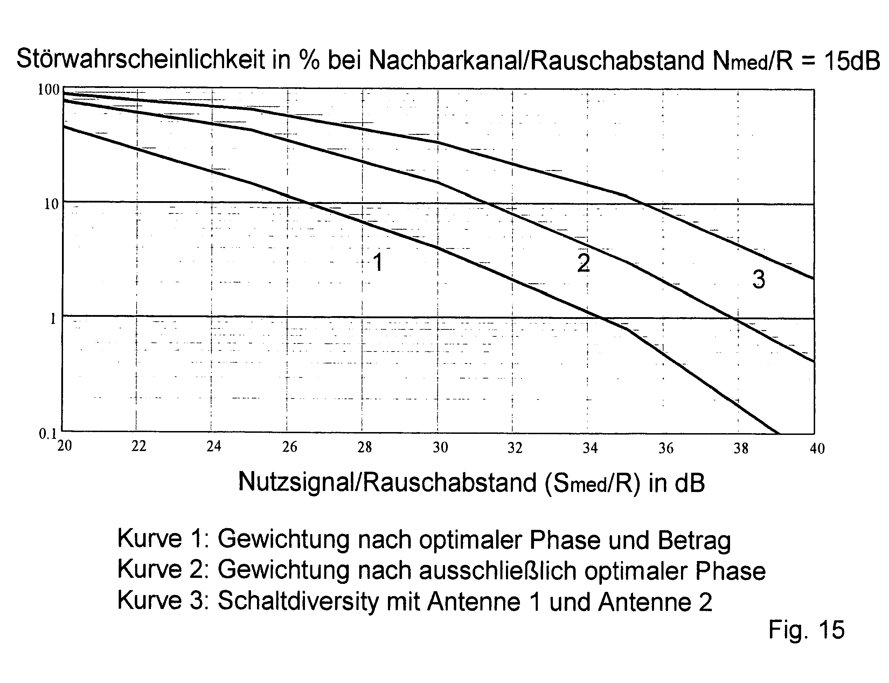

Auf analoge Weise sind in Fig. 15 entsprechend den Empfangssituationen wie in Figur 13 an Stelle der Diversityeffizienzen die Wahrscheinlichkeiten der auftretenden Störungen aufgetragen. Die Kurven 1 bis 3 beschreiben die gleichen Strategien wie in den Figuren 12 bis 14.

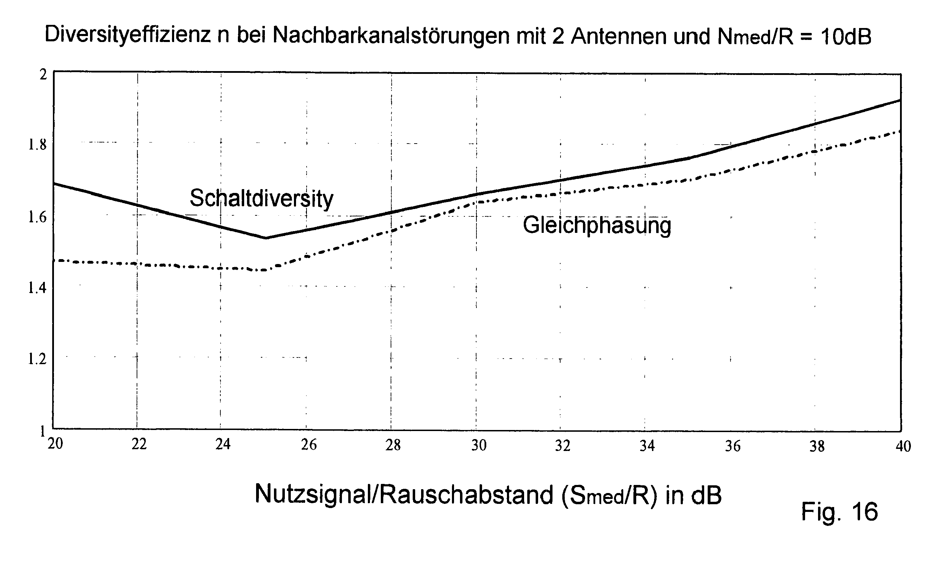

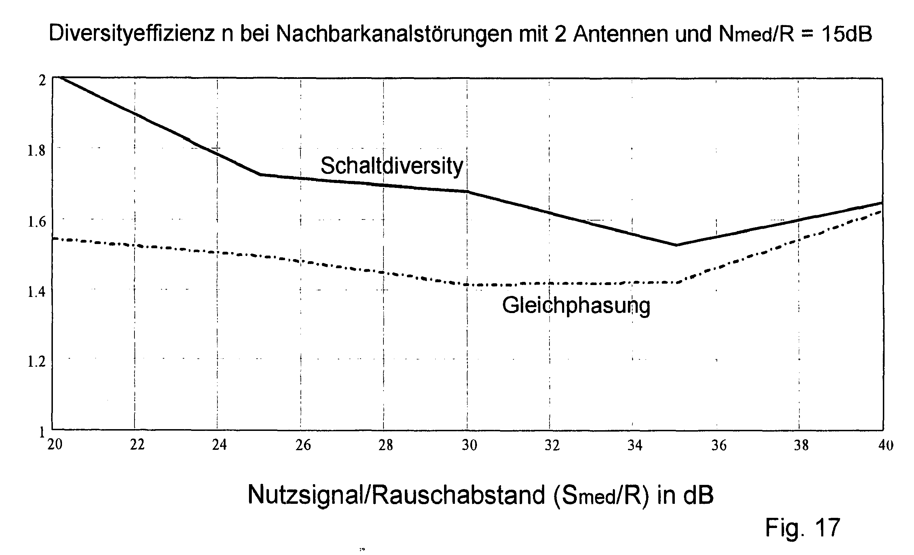

In Fig. 16 sind die Diversityeffizienzen bei Nachbarkanalstörungen mit 2 Antennen und $N_{med}/R = 10$dB von der gleichphasigen Überlagerung der Antennen-Empfangssignale 7a, 7b und einem reinen Schaltdiversity vergleichend gegenübergestellt. Daraus geht deutlich hervor, dass aufgrund der Nachbarkanalstörungen die mit Gleichphasung erreichbare Maximierung des Nutzsignals an jedem Empfangsort dem einfacheren Schaltdiversity unterlegen ist. Mit zunehmendem Pegel der Nachbarkanal-Störungen $N_{med}$ wächst diese Überlegenheit weiter an. Dies geht deutlich aus Fig. 17 hervor, worin die Diversityeffizienz n bei ansonsten gleichen Bedingungen jedoch für $N_{med}/R = 15$dB dargestellt ist. Aufgrund der Nachbarkanalstörungen ist die Gleichphasung selbst dem einfacheren Schaltdiversity hier deutlich unterlegen. Damit ist in Verbindung mit den in den Figuren 12 mit 15 dargestellten Ergebnissen nachgewiesen, dass sich bei einer Antennendiversity-Anlage nach der vorliegenden Erfindung mit nur zwei Antennen maximale Diversityeffizienz erwirken lässt

In einer weiteren vorteilhaften Ausgestaltung der Erfindung ist im Empfänger 1 mindestens ein Empfängertuner 32 zum abstimmbaren selektiven Empfang eines zusätzlichen Funkkanals vorhanden. Ein solcher Empfängertuner 32 ist in einem Rundfunkempfänger mit Antennendiversity für UKW-Empfang nach der vorliegenden Erfindung zum Beispiel notwendig, um auch Sender im LMK-Wellenbereich zu empfangen beziehungsweise um z. B.

mit einem im Hintergrund arbeitenden UKW-Empfängertuner 32 die Auswertung der mit dem Radio Data System (RDS) ausgestrahlten Zusatzsignale der verschiedenen Rundfunkanstalten zu ermöglichen. Erfindungsgemäß ist es deshalb bei einer Antennendiversityanlage der vorliegenden Art vorteilhaft, die Empfangssignale mindestens einer der beiden Antennen in der Frequenzlage unverändert zum Empfänger 1 und dort zu dem entsprechenden Empfängertuner 32 zum selektiven Empfang eines zusätzlichen Rundfunkkanals zu führen. Dies kann in der Anordnung in Figur 6 z. B. in der Weise geschehen, dass das Antennen-Empfangssignal 7a durch das Antennendiversitymodul 6 zu dessen Ausgang geschleift und über die Empfängerleitung 4 dem im Empfänger 1 befindlichen Empfängertuner 32 zugeführt wird.

**Bezugszeichenliste**

Antennen A1, A2
Empfänger 1
Antennenanlage 2
Antennenzuleitungen 2a, 2b
Prozessor 3
Empfängerleitung 4
einstellbares Übertragungsglied 5
Antennendiversitymodul 6
Antennen-Empfangssignal 7a,b
Empfangssignal 8
Summationsglied 9
einstellbare Phasendreheinrichtung 10
einstellbares Signalpegelglied 11a, 11b
einstellbares Linearkombinationsglied 12
Einstellsignale 13
Pegel-Einstellsignal 13 a
Phasen-Einstellsignal 13b
Digitaler Signalprozessor 14
Erster separater Signalpfad 15
Zweiter separater Signalpfad 16
Suchalgorithmus 17
Störungsanzeigesignal 18
Auswerteschaltung 19
ZF-Signal 20
ZF-Filter 21a, 21 b
Verstärker mit Vorselektion 22a, 22b
Digitalisiertes ZF-Signal 23a, 23b
Antennenverstärker 24a, 24b
ZF-Frequenzumsetzer 25a, 25b
Oszillator 26
Empfangssignale in der Zwischenfrequenzebene 27a, 27b
Analog-Digitalwandler 28a, 28b
Oszillatorschwingung 29
Digitales Empfangssignal 30
ZF-Empfangssignal 31
Empfängertuner 32

Augenblickliches Nutzsignal-Störsignal-Verhältnis SDR
Mittlerer Nachbarkanal/Rauschabstand $N_{med}/R$

Mittlerer Nutzsignal/Rauschabstand $S_{med}/R$
Komplexer Übertragungsfaktor $\underline{k}$, $\underline{k1}$, $\underline{k2}$, $\underline{k15}$, $\underline{k16}$

**Patentansprüche**

1. Antennendiversityanlage für den Funkempfang in Fahrzeugen, die einen Empfänger (1), zwei Antennen ((A1, A2)) mit Antennenzuleitungen (2a, 2b) zu einem Antennendiversitymodul (6), welches ausgangsseitig mit dem Empfänger (1) über die Empfängerleitung (4) verbunden ist und eine Auswerteschaltung (19) umfasst, welche die Störungen in dem gerade zum Empfänger (1) gelangenden Empfangssignal (8) bewertet,
**gekennzeichnet durch die folgenden Merkmale:**

   - im Antennendiversitymodul (6) sind die beiden Antennen-Empfangssignale (7a, 7b) nach Betrag und Phasenwinkel einstellbar kombiniert und das linear kombinierte Signal ist am Ausgang des Antennendiversitymoduls (6) als Empfangssignal (8) vorhanden
   - ein Prozessor (3) bewirkt anhand des Störungsanzeigesignals (18) der Auswerteschaltung (19) stets eine Einstellung von Betrag und Phasenwinkel der Linearkombination der beiden Antennen-Empfangssignale (7a, 7b) für ein störungsarmes Empfangssignal (8).

2. Antennendiversityanlage nach Anspruch 1,
**gekennzeichnet durch die folgenden Merkmale:**

   - im Antennendiversitymodul (6) ist ein einstellbares Linearkombinationsglied (12) vorhanden, dessen erstem und zweitem Eingang jeweils eines der beiden Antennen-Empfangssignale (7a, 7b) zugeführt ist und welche darin mit nach Betrag und Phasenwinkel kombiniert einstellbarer Gewichtung überlagert sind und am Ausgang des Antennendiversitymoduls (6) ein mit dieser Gewichtung linear kombiniertes Signal als Empfangssignal (8) zur Verfügung steht,
   - im einstellbaren Linearkombinationsglied (12) ist mindestens ein einstellbares lineares Übertragungsglied (5) vorhanden mit einstellbarem komplexen Übertragungsfaktor (k) zur Einstellung der Gewichtung der Überlagerung nach Betrag und Phase
   - dem Prozessor (3) ist das Störungsanzeigesignal (18) der Auswerteschaltung (19) zugeführt, **durch** welchen Einstellsignale (13) zur Einstellung des mindestens einen Übertragungsglieds (12a) erzeugt und letzterem zugeführt sind
   - im Prozessor (3) ist ein Suchalgorithmus (17) abgelegt, wonach in kurzzeitig aufeinander folgenden Schritten die von der Auswerteschaltung (19) angezeigten Störungen und somit die Störungen des zum Empfänger (1) gelangenden Empfangssignals (8) sukzessiv vermindert werden.

3. Antennendiversityanlage nach Anspruch 2,
**gekennzeichnet durch die folgenden Merkmale:**

   - im einstellbaren Linearkombinationsglied (12) sind im Anschluss an den ersten und zweiten Eingang mindestens ein erster und ein zweiter separater Signalpfad (15, 16) vorhanden, deren Ausgangssignale den Eingängen eines Summationsglieds (9) zugeführt und in diesem summiert werden, wobei das summierte Signal (8) dem Empfänger (1) über die Empfängerleitung (4) zugeführt wird,
   - mindestens einer der beiden separaten Signalpfade (15, 16) enthält ein einstellbares Signalpegelglied (11) zur Einstellung des Betrags des komplexen Übertragungsfaktors ($\underline{k15}$, $\underline{k16}$) des betreffenden Signalpfads (15,16)
   - mindestens einer der Signalpfade (15, 16) enthält eine einstellbare Phasendreheinrichtung (10) zur Einstellung des Phasenwinkels des komplexen Übertragungsfaktors ($\underline{k15}$, $\underline{k16}$) des betreffenden Signalpfads (15,16)
   - das zur Einstellung des Betrags des komplexen Übertragungsfaktors ($\underline{k15}$, $\underline{k16}$) des betreffenden Signalpfads (15,16) erforderliche Pegel-Einstellsignal (13a) ist dem mindestens einen einstellbaren Signalpegelglied (11a, b) zugeführt
   - das zur Einstellung des Phasenwinkels des komplexen Übertragungsfaktors ($\underline{k15}$, $\underline{k16}$) des betreffenden Signalpfads (15,16) erforderliche Phasen-Einstellsignal (13b) ist der mindestens einen einstellbaren Phasendreheinrichtung (10) zugeführt

4. Antennendiversityanlage nach Anspruch 3,
**dadurch gekennzeichnet, dass**

das mindestens eine zur Einstellung des Betrags des komplexen Übertragungsfaktors (k15, k16) vorhandene Signalpegelglied (11a, b) und die mindestens eine zur Einstellung des Phasenwinkels des komplexen Übertragungsfaktors (k15, k16) vorhandene Phasendreheinrichtung (10) digital einstellbar sind und das Ausgangssignal des Prozessors zur Einstellung des komplexen Übertragungsfaktors als logisches Einstellsignal (13) gestaltet ist.

5. Antennendiversityanlage nach Anspruch 1 bis 4,
   **dadurch gekennzeichnet, dass**
   im Antennendiversitymodul für jedes der beiden Antennen-Empfangssignale (7a, b) ein ZF-Frequenzumsetzer (25a, 25b) vorhanden ist, durch welchen dieses in die ZF-Frequenzebene umgesetzt ist und die Abstimmungen auf den Nutzempfangskanal durch die über die Empfängerleitung (4) zu beiden Frequenzumsetzern (25a, 25b) geführte Oszillatorschwingung (29) des im Empfänger (1) befindlichen Oszillators (26) gegeben ist und das einstellbare Linearkombinationsglied (12) für die Zwischenfrequenz ausgestaltet ist und das Empfangssignal (8) als ZF-Empfangssignal (31) am Ausgang des einstellbaren Linearkombinationsglied (12) gebildet ist.

6. Antennendiversityanlage nach Anspruch 5,
   **dadurch gekennzeichnet, dass**
   jedem ZF-Frequenzumsetzer (25a, 25b) ein Analog-Digitalwandler (28a, 28b) nachgeschaltet ist und die beiden Empfangssignale in der Zwischenfrequenzebene (27a, 27b) einem digitalen Signalprozessor (14) digitalisiert zugeführt sind, in welchem die Funktionen des einstellbaren Linearkombinationsglieds (12), der Auswerteschaltung (19) und des Prozessors (3) digitalisiert vorhanden sind und das Empfangssignal (8) als digitales Empfangssignal (30) dem Empfänger (1) über die Empfängerleitung (4) zur Weiterverarbeitung zugeführt ist und die Einstellung der Linearkombination laufend an Hand der digitalen Ausgangsgröße einer der Auswerteschaltung (19) entsprechenden Funktion rechnerisch nach dem festgelegten Suchalgorithmus (17) im Signalprozessor (14) gegeben ist.

7. Antennendiversityanlage nach Anspruch 6,
   **dadurch gekennzeichnet, dass**
   jedoch der Oszillator (26) im Antennendiversitymodul (6) untergebracht und digital abstimmbar gestaltet ist und die Frequenzinformationen zur Einstellung der Oszillatorfrequenz als digitales Signal vom Empfänger (1) über die Empfängerleitung (4) an den Oszillator (26) geführt ist.

8. Antennendiversityanlage nach Anspruch 1 bis 7,
   **dadurch gekennzeichnet, dass**
   die beiden Antennen (A1, A2) als mit einer auf das betreffende Empfangsfrequenzband zugeschnittenen begrenzenden Wirkung zur Spiegelfrequenzunterdrückung gestaltet sind

9. Antennendiversityanlage nach Anspruch 8 in Verbindung mit den Ansprüchen 5 und 6,
   **dadurch gekennzeichnet, dass**
   die beiden Antennen (A1, A2) als aktive Antennen mit hinreichend großer Signalverstärkung und mit einer Signalpegel-Regeleinrichtung ausgerührt sind und die Antennen-Empfangssignale 7a, b jeweils den zugehörigen ZF-Frequenzumsetzem (25a, 25b) zugeführt sind.

10. Antennendiversityanlage nach Ansprüchen 1 bis 9,
    **dadurch gekennzeichnet, dass**
    die beiden Antennen (A1, A2) im Mittel etwa gleiche Empfangsleistungen aufweisen und durch den im Prozessor (3) abgelegten Suchalgorithmus (17) in den aufeinander folgenden Suchschritten jeweils eine unterschiedliche Phaseneinstellung gewählt ist und bei dieser Einstellung unterschiedliche Betragswerte für die Linearkombination eingestellt sind und dieser Vorgang solange fortgesetzt ist, bis das Störungsanzeigesignal (18) einen kleinen Wert annimmt, der einem als rein empfundenen Empfang entspricht, beziehungsweise wenn das Störungsanzeigesignal (18) einen minimalen Wert annimmt.

11. Antennendiversityanlage nach Ansprüchen 1 bis 9,
    **dadurch gekennzeichnet, dass**
    die beiden Antennen (A1, A2) im Mittel etwa gleiche Empfangsleistungen aufweisen und mit dem im Prozessor (3) abgelegten Suchalgorithmus (17) bei einer Einstellung des Übertragungsfaktors von etwa $|k| = 1$ in den aufeinander folgenden Suchschritten als unterschiedliche Phaseneinstellung zunächst die vier Winkelquadranten aufeinander folgend gewählt und die entsprechenden Störungsanzeigesignale (18) vergleichend erfasst sind und ausgehend von der Winkeleinstellung mit der kleinsten Störung durch Halbierung des jeweils verbleibenden Winkelbereichs des betreffenden Quadranten auf analoge Weise vergleichend erfasst sind und mit einer Genauigkeit bis zu minimal 10° der Winkel mit der kleinsten Störung ermittelt ist und bei dieser Winkeleinstellung der Betrag |$\underline{k}$| der Linearkombination, beginnend mit größeren Schritten und hin zu kleineren Schritten von bis zu 1 dB verändert ist und der Suchvorgang jedoch abgebrochen wird, wenn das Störungsanzeigesignal (18) einen kleinen Wert annimmt, der einem als rein empfundenen Empfang entspricht.

12. Antennendiversityanlage nach Ansprüchen 1 bis 4 und 8 bis 11,
    **dadurch gekennzeichnet, dass**
    die Auswerteschaltung (19) und der Prozessor (3) im Antennendiversitymodul (6) untergebracht und das Empfangssignal (8) zur Prüfung auf Störung in Form des im Empfänger (1) gebildeten ZF-Signals (20) über die Empfängerleitung (4) dem Antennendiversitymodul (6) und dort der Auswerteschaltung (19) zugeführt ist.

13. Antennendiversityanlage nach Ansprüchen 1 bis 4 und 8 bis 11,
    **dadurch gekennzeichnet, dass**
    die Auswerteschaltung (19) zur Prüfung des Empfangssignals (8) im Empfänger (1) untergebracht und das Störungsanzeigesignal (18) über die Empfängerleitung (4) dem Antennendiversitymodul (6) und dort dem Prozessor (3) zugeführt ist.

14. Antennendiversityanlage nach Ansprüchen 1 bis 4 und 8 bis 11,
    **dadurch gekennzeichnet, dass**
    die Auswerteschaltung (19) und der Prozessor (3) im Empfänger (1) untergebracht sind und die vom Prozessor (3) generierten Einstellsignale (13) vorzugsweise digital gestaltet und über die Empfängerleitung (4) dem Antennendiversitymodul (6) und dort dem digital gestalteten einstellbaren Linearkombinationsglied (12) zugeführt sind.

15. Antennendiversityanlage nach Ansprüchen 1 bis 14,
    **dadurch gekennzeichnet, dass**
    im Empfänger (1) mindestens ein Empfängertuner (32) zum selektiven Empfang eines zusätzlichen Funkkanals vorhanden ist und die von mindestens einer der beiden Antennen A1, A2 aufgenommenen Empfangssignale (7a, 7b) in ihrer ursprünglichen Frequenzlage durch das Antennendiversitymodul 6 geschleift sind und über die Empfängerleitung (4) dem Empfänger (l) und dort dem mindestens einen Empfängertuner (32) zum selektiven Empfang eines zusätzlichen Funkkanals zugeführt sind.

Fig. 1

$$\left|\underline{S1}*\underline{k1}+\underline{S2}*\underline{k2}\right|^2$$

$$\left|\underline{N1}*\underline{k1}+\underline{N2}*\underline{k2}\right|^2$$

$$R^2*\left(\left|\underline{k1}\right|^2+\left|\underline{k2}\right|^2\right)$$

Fig. 2

Fig. 3

EP 2 031 767 A2

Fig. 4

Fig. 5

Fig. 6

Fig. 7

Signalpegel S und Nachbarkanalpegel N in dB über d. rel. Wegstrecke l/λ
Von Antenne 1 und Antenne 2 auf einem Fahrzeug

Fig. 8

Fig. 9

## Winkelgetreue Überlagerung der Empfangsspannungen der Signalwellen in Antenne 1

Fig. 10

EP 2 031 767 A2

Winkelgetreue Überlagerung der Empfangsspannungen der Signalwellen in Antenne 1

Fig. 11

**Diversityeffizienz n bei Nachbarkanal/Rauschabstand Nmed/R = 10dB**

Nutzsignal/Rauschabstand (Smed/R) in dB

Kurve 1: Gewichtung nach optimaler Phase und Betrag
Kurve 2: Gewichtung nach ausschließlich optimaler Phase
Kurve 3: Schaltdiversity mit Antenne 1 und Antenne 2

Fig. 12

Diversityeffizienz n bei Nachbarkanal/Rauschabstand $N_{med}/R$ = 15dB

Nutzsignal/Rauschabstand ($S_{med}/R$) in dB

Kurve 1: Gewichtung nach optimaler Phase und Betrag

Kurve 2: Gewichtung nach ausschließlich optimaler Phase

Kurve 3: Schaltdiversity mit Antenne 1 und Antenne 2

Fig. 13

EP 2 031 767 A2

Störwahrscheinlichkeit in % bei Nachbarkanal/Rauschabstand $N_{med}/R$ = 10dB

Nutzsignal/Rauschabstand ($S_{med}/R$) in dB

Kurve 1: Gewichtung nach optimaler Phase und Betrag
Kurve 2: Gewichtung nach ausschließlich optimaler Phase
Kurve 3: Schaltdiversity mit Antenne 1 und Antenne 2

Fig. 14

EP 2 031 767 A2

Störwahrscheinlichkeit in % bei Nachbarkanal/Rauschabstand $N_{med}/R$ = 15dB

Nutzsignal/Rauschabstand ($S_{med}/R$) in dB

Kurve 1: Gewichtung nach optimaler Phase und Betrag
Kurve 2: Gewichtung nach ausschließlich optimaler Phase
Kurve 3: Schaltdiversity mit Antenne 1 und Antenne 2

Fig. 15

EP 2 031 767 A2

Diversityeffizienz n bei Nachbarkanalstörungen mit 2 Antennen und Nmed/R = 10dB

Schaltdiversity

Gleichphasung

Nutzsignal/Rauschabstand (Smed/R) in dB

Fig. 16

EP 2 031 767 A2

Diversityeffizienz n bei Nachbarkanalstörungen mit 2 Antennen und $N_{med}/R$ = 15dB

Nutzsignal/Rauschabstand ($S_{med}/R$) in dB

Fig. 17

EP 2 031 767 A2

**EP 2 031 767 A2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005043
- EP 11266 A
- EP 1126631 A